# EUROPÄISCHE PATENTSCHRIFT

(11) **EP 0 986 715 B1**
(45) Veröffentlichungstag und Bekanntmachung des Hinweises auf die Patenterteilung: **18.07.2001**
(21) Anmeldenummer: 98933521.1
(22) Anmeldetag: 13.05.1998
(51) Int. Cl.: F16L 55/05

(54) **VORRICHTUNG ZUM AUFTRAGEN EINES FLUIDEN BEHANDLUNGSMITTELS AUF EINE BAHN**
DEVICE FOR APPLYING A FLUID PROCESSING AGENT TO A STRIP OF FABRIC
DISPOSITIF POUR L'APPLICATION D'UN AGENT DE TRAITEMENT FLUIDE SUR UNE BANDE

(30) Priorität: 06.06.1997 DE 19723802
(43) Veröffentlichungstag der Anmeldung: 22.03.2000
(73) Patentinhaber: Eduard Küsters Maschinenfabrik GmbH & Co. KG, 47805 Krefeld (DE)
(72) Erfinder: AHRWEILER, Karl-Heinz, D-47877 Willich (DE)
(74) Vertreter: Palgen, Peter, Dipl.-Phys. Dr.
(86) Internationale Anmeldenummer: DE9801329
(87) Internationale Veröffentlichungsnummer: WO9855794

(56) Entgegenhaltungen:
- DE-B- 1 096 694
- US-A- 2 448 118
- US-A- 2 609 001
- US-A- 3 103 234

## Beschreibung

Die Erfindung bezieht sich auf eine Vorrichtung zum Auftragen eines fluiden Behandlungsmittels auf eine Bahn.

Es ist bekannt, zum Auffangen und Dämpfen von Druckschwankungen und Druckstößen in flüssigkeitsführenden Rohrleitungen an diesen einen sogenannten Druckspeicher anzubringen, der über eine Zweigleitung mit der Rohrleitung verbunden ist. Diese Anordnung funktioniert, solange in der Rohrleitung stets nur ein und dieselbe Flüssigkeit strömt. Kommt es aber im Betrieb zu einem Flüssigkeitswechsel, so kann sich die in der Zweigleitung und auf der einen Seite des Druckspeichers befindliche Restmenge der vorangehenden Flüssigkeit als störend erweisen, indem sie sich mit der nächsten Flüssigkeit nach und nach vermischt und diese verunreinigt. Sinnfällig wird dieses Problem bei Zuleitungen zu Auftragsköpfen, die fluide Behandlunsmittel in Gestalt vonFärbeflotten führen. Entsprechende Anlagen sind z.B. aus der DE-A1 29 00 712 und der DE-A1 33 15 770 A1 bekannt.Wenn z.B. zuerst rot gefärbt worden ist und eine Umstellung auf gelb erfolgt, wird sich die in der Zweigleitung und auf der einen Seite des Druckspeichers befindliche rote "tote" Restfarbmenge nach und nach mit dem gelb vermischen und dies in orange verfälschen.

Der Erfindung liegt die Aufgabe zugrunde, eine Anordnung zur Beeinflussung der in einer Zuleitung zu einem Auftragskopf strömenden Flüssigkeitsmenge zu schaffen, bei der bei einem Wechsel des Behandlungsmediums mit möglichst geringer Restmenge zu rechnen ist.

Diese Aufgabe wird durch die in Anspruch 1 wiedergegebene Erfindung gelöst.

Das "Rohrelement" ist für sich genommen als Manschettenventil aus der DE 40 31 228 A1, ir der relevanteren Funktion als Druckstoßdämpfer aus der DE 10 96 694 B bekannt. Er übt dabei praktisch die gleiche Funktion wie der bereits erwähnte Druckspeicher aus. Der "Druckspeicher" umgibt hierbei gewissermaßen die. Rohrleitung und setzt deren Innenumfang praktisch fluchtend fort, ohne daß es einer Zweigleitung und ähnlicher Raumbereiche bedarf, die mit Flüssigkeit zu füllen sind, wenn der "Druckspeicher" seine Funktion ausüben soll.

Diese Funktion hat zwei Aspekte.

Wenn an dem Anschluß ein Druck aufrechterhalten wird, der dem Druck in der strömenden Flüssigkeit entspricht, so bleibt der Schlauchabschnitt im wesentlichen zylindrisch und setzt lediglich die Rohrleitung mit praktisch gleichem Durchmesser fort. In diesem Zustand kann das Rohrelement - wie bekannt - als Dämpfungsglied dienen, insofern bei einem Druckstoß der elastisch nachgiebige Schlauchabschnitt etwas zurückweicht und den Druckstoß abfängt.

Der andere Aspekt betrifft eine aktive Beeinflussung der Strömung des Behandlungsmittels in der Zuleitung, indem der Anschluß mit einem Raumbereich stark erniedrigten Drucks, also einem evakuierten Behälter, in Verbindung gebracht wird. In der Ringkammer entsteht dadurch ein Unterdruck, so daß sich der Schlauchabschnitt in der Ringkammer aufbläht und dabei Anteile des strömenden Behandlungsmittels in sich aufnimmt. Dies kann dazu benutzt werden, beim Abschalten der die Strömung des Behandlungsmittels bewirkenden Pumpe Anteile des Behandlungsmittels aus dem stromabwärtsgelegenen Zuleitungsbereich zurückzuziehen, um z.B. ein Auslaufen oder ein Vermischen mit anderen Flüssigkeiten zu verhindern. Wird nämlich bei der Auftragsvorrichtung die Zufuhr von Behandlungsmittel abgestellt und gleichzeitig der Anschluß der Ringkammer mit dem Unterdruckraum verbunden, so wird der Schlauchabschnitt in die Ringkammer hineingesaugt, vergrößert dadurch sein Volumen und zieht die in den Zuführkanälen und in dem Schlitz stehende Behandlungsmittel aus dem Schlitz zurück, so daß der Auftrag auf die Bahn sofort wirksam vollständig unterbrechbar ist.

Die konstruktive Ausbildung des Rohrelements in seiner bevorzugten Ausführungsform kann nach Anspruch 2 getroffen sein. Die radialen Flanschen begrenzen mit dem Innenumfang des Rohrabschnitts einen im wesentlichen rechteckigen Ringraumquerschnitt, der zur Achse der Rohrleitung an sich offen und durch den Schlauchabschnitt geschlossen ist. Beim Anlegen eines Unterdrucks verformt sich der Schlauchabschnitt radial nach außen in den Ringraum hinein.

Die Verbindung der Enden des Schlauchabschnitts mit den radialen Flanschen erfolgt zweckmäßig mittels Klemmringen (Anspruch 3), die in der in Anspruch 4 wiedergegebenen Weise ausgebildet sein können. Der jeweilige Konusring wird mit den radialen Flanschen an dem Rohrabschnitt zweckmäßig durch axiale Spannschrauben verspannt (Anspruch 5), wobei die Verklemmung der Enden des Schlauchabschnitts über zusammenwirkende und gemäß Anspruch 6 angeordnete Konusflächen erfolgen kann.

In der Auftragsvorrichtung können mindestens ein Abschlagventil und ein Spülventil nach den Ansprüchen 7 und 8 vorgesehen sein.

In der Zeichnung sind Ausführungsbeispiele der Erfindung dargestellt.
In den Fig. 1 und 2 sind durch die Achse gehende Längsschnitte durch zwei baulich verschiedene Ausführungsformen des erfindungseinsetzbaren Rohrelements wiedergegeben;
Fig. 3 und 4 zeigen schematische Diagramme zweier wichtiger Einsatzfälle des Rohrelements;
Fig. 5 zeigt ein Diagramm einer mit dem Rohrelement versehenen Färbe- oder Bemusterungsvorrichtung für schnellen Farbwechsel;
Fig. 6 zeigt ein Ablaufdiagramm der Anlage nach Fig. 5 bei einem sogenannten Abschlag.

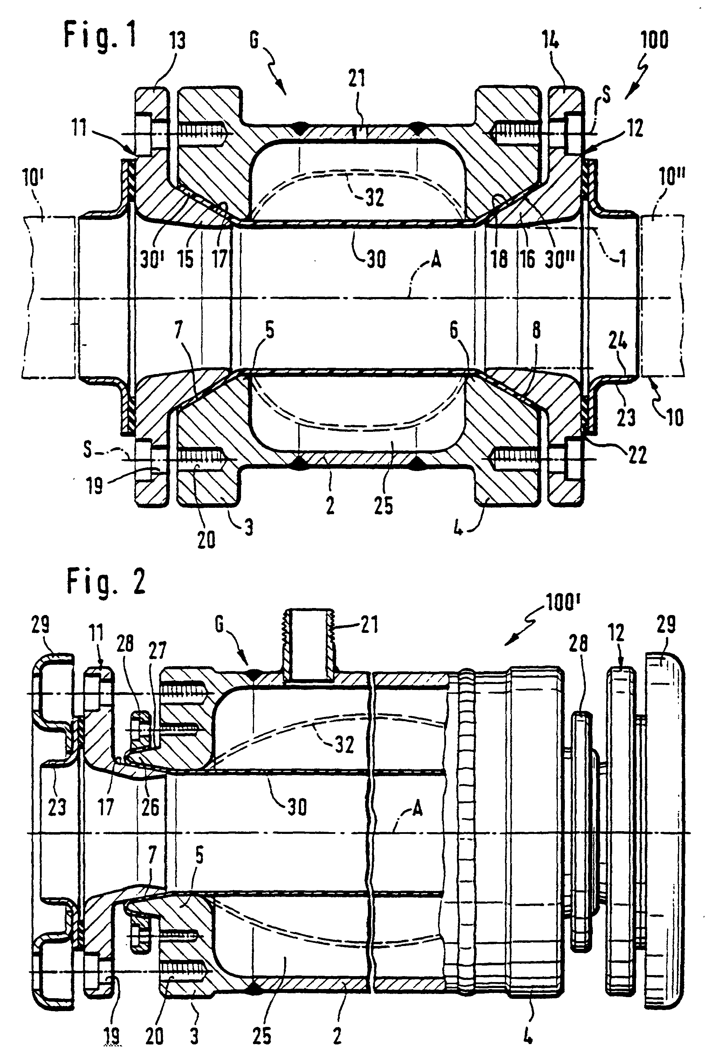

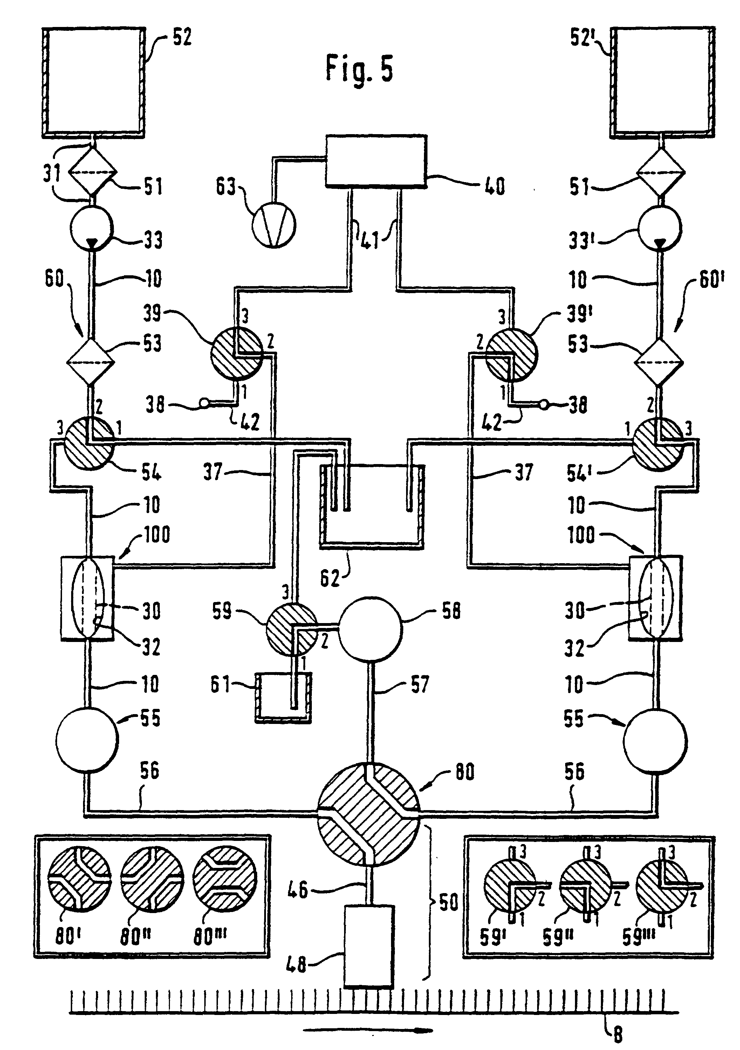

Das in Fig. 1 als Ganzes mit 100 bezeichnete Rohrelement wird in eine eine Zuleitung 10 zu einem Auftragskopf 48 für ein fluides Behandlungsmittel (Fig. 5) bildende Rohrleitung eingesetzt, deren Enden 10',10" gleichen Durchmesser aufweisen und einander fluchtend, d.h. auf der gleichen Achse A mit einem Abstand gegenüberstehen, der der Länge des Rohrelements 100 in Richtung der Achse A entspricht. Der Innenumfang der Rohrleitung 10 wird zwischen den Enden 10',10" durch eine gedachte Zylinderläche 1 fortgesetzt, die im wesentlichen den gleichen Durchmesser wie die Rohrleitung 10 aufweist.

Die Zylinderfläche 1 ist mit radialem Abstand von einem Gehäuse G umgeben, welches einen zur Achse A koaxialen Rohrabschnitt 2 umfaßt, an dessen Enden radiale Flansche 3,4 angeschweißt sind, die nach innen bis in die Nähe der gedachten Zylinderfläche 1 reichende Umfangsvorsprünge 5,6 bilden. Die inneren Umfangsflächen 7,8 der radialen Flanschen 3,4 sind derart konisch gestaltet, daß sich die Konusflächen axial nach innen verjüngen. Der Konuswinkel beträgt in dem Ausführungsbeispiel etwa 30°.

An beiden Enden des Rohrelements 100 sind Konusringe 11,12 vorgesehen, die zur Achse A koaxial sind und in einem durch die Achse A gehenden Längsschnitt eine Winkelkonfiguration mit einem radialen Schenkel 13,14 und einem von diesem axial zur Mitte hin vorspringenden axialen Schenkel 15,16 aufweisen, dessen Innenumfang jeweils im wesentlichen im Bereich der gedachten Zylinderfläche 1 liegt. Der Außenumfang der axialen Schenkel 15,16 bildet jeweils eine Konusfläche 17,18, die den gleichen Konuswinkel aufweist wie die Konusflächen 7,8 und radial dicht innerhalb derselben gelegen ist.

An den äußeren Stirnseiten der Konusringe 11,12 sind über Dichtungen 22 Anschlußstutzen 23 angebracht, deren Innenumfangsfläche 24 im wesentlichen in der gedachten Zylinderfläche 1 liegt und die zur Verbindung mit den Enden 10',10" der Zuleitung 10 dient, sei es durch Anschweißen, sei es in irgendeiner anderen bekannten Art.

Der radiale Schenkel 13,14 erstreckt sich jeweils vor der Stirnseite des radialen Flansches 3,4. Es sind in diesem Bereich über den Umfang verteilte axiale, in Fig. 1 nur durch ihre Mittellinien angedeutete Spannschrauben S vorgesehen, die Durchgangsbohrungen 19 in den radialen Schenkeln 13,14 durchgreifen und in Gewindebohrungen 20 in den radialen Flanschen 3,4 eingreifen.

Zwischen den inneren Umfangsvorsprüngen 5,6 erstreckt sich ein Schlauchabschnitt 30 aus einem in seiner Fläche elastisch nachgiebigen Material wie z.B. einem elastomeren Kunststoff oder Gummi, dessen Enden 30',30" zwischen die Konusflächenpaare 7,17 bzw. 8,18 greifen und beim Anziehen der Spannschrauben dazwischen eingeklemmt werden. Der Schlauchabschnitt 30 ist in kräftefreiem Zustand zylindrisch und erstreckt sich im wesentlichen im Bereich der Zylinderfläche 1.

Zwischen den radialen Flanschen 3,4 ist also eine Ringkammer 25 gebildet, die radial nach innen durch den Schlauchabschnitt 30, radial nach außen durch den Innenumfang des Rohrabschnitts 2 und axial durch die Flanschen 3,4 begrenzt ist und einen Anschluß 21 aufweist, durch den das Innere der Ringkammer 25 mit Zonen unterschiedlichen Drucks verbindbar ist.

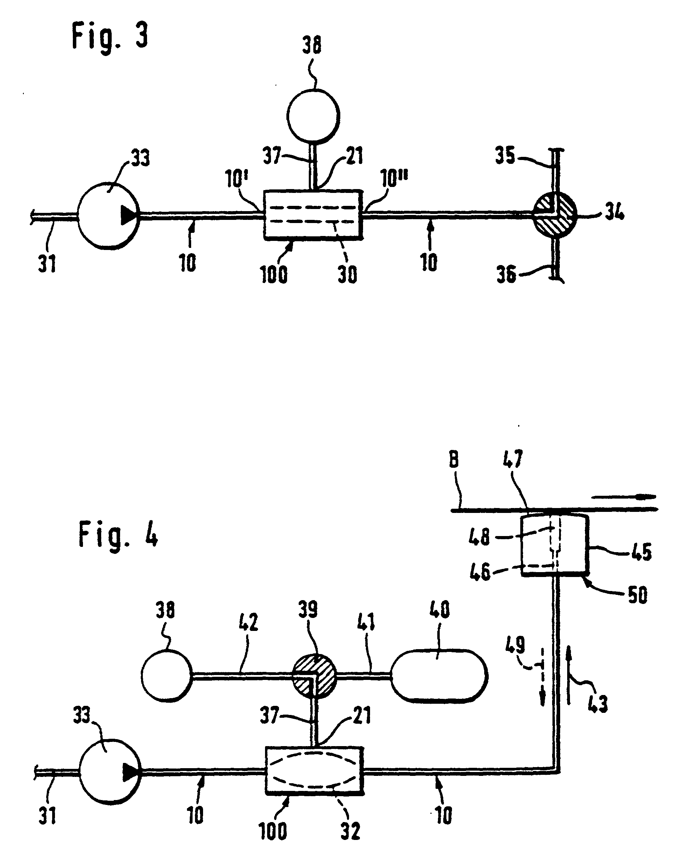

Wenn in der Ringkammer 25 im wesentlichen der gleiche Druck aufrechterhalten wird wie in der Zuleitung 10, verbleibt der Schlauchabschnitt 30 in dem in Fig. 1 ausgezogen wiedergegebenen zylindrischen Zustand und dient als Dämpfungsglied für in der Zuleitung 10 auftretende Druckstöße. Wenn aber die Ringkammer 25 an dem Anschluß 21 mit einem Unterdruckraum, d.h. einem evakuierten Behälter verbunden wird, bläht sich der Schlauchabschnitt 30 wegen seiner Elastizität in die Ringkammer 25 hinein auf, wie in Fig. 1 gestrichelt dargestellt ist. Dadurch entsteht innerhalb des Schlauchabschnitts 30 ein vergrößertes Volumen, in das Flüssigkeit aus der Zuleitung 10 eingesaugt . wird. So kann z.B. Flüssigkeit in im Zusammenhang mit Fig. 4 noch zu beschreibender Weise von einer Austrittsstelle zurückgesaugt werden.

Es ist aus Fig. 1 ferner zu ersehen, daß innerhalb des Rohrelements 100 durch dessen beschriebene Ausbildung keine nennenswerten radialen Spalte oder sonstige toten Räume vorhanden sind, in denen merkliche Flüssigkeitsmengen bei einem Flüssigkeitswechsel zurückbleiben könnten. Die Zuleitung 10 setzt sich vielmehr durch das Rohrelement 100 glatt fort. Die Entleerung kann ebenfalls vollständig erfolgen wie bei einem glatt durchgehenden Rohr.

Soweit bei dem Rohrelement 100' der Fig. 2 funktionell entsprechende Teile vorhanden sind, sind diese mit gleichen Bezugszahlen gekennzeichnet.

Ein Unterschied zu dem Rohrelement 100 besteht darin, daß der radiale Flansch 3,4 einen nach außen weisenden axialen Ansatz 26 mit einer konischen äußeren Umfangsfläche 27 aufweist, auf der ein Konusring 28 sitzt, der den um den axialen Ansatz 26 zurückgeklappten äußeren Rand des Schlauchabschnitts zusätzlich festklemmt.

Noch ein Unterschied besteht in dem Vorhandensein eines axial äußeren Halterings 29, der von außen gegen die Anschlußbuchse 23 anliegt.

In Fig. 3 ist ein Anwendungsbeispiel des Rohrelements 100 schematisch angedeutet. Über eine Leitung 31 saugt eine Pumpe 33 aus einem Vorrat Behandlungsflüssigkeit an und fördert diese in die Zuleitung 10, deren Ende 10' mit dem Rohrelement 100 auf der in Fig. 3 linken Seite verbunden ist. Auf der rechten Seite ist das Rohrelement 100 an das Ende 10" der Zuleitung 10 angeschlossen, die zu einem Ventil 34 weiterführt, welches die Zuleitung 10 wahlweise mit der Leitung 35 oder der Leitung 36 verbindet. An dem Anschluß 21 der Ringkammer 25 ist über eine Leitung 37 ein durch einen Kreis nur angedeuteter mit Druckluft gefüllter Bereich 38 angeschlossen, in welchem ein geregelter Druck herrscht, der dem Druck in der Zuleitung 10 entspricht.

Wenn die Pumpe 33 aus irgendeinem Grunde einen Druckstoß erzeugt oder wenn beim Umschalten des Ventils 34 von der anderen Seite ein Druckstoß erfolgt, so kann der elastisch nachgiebige Schlauchabschnitt 30, der die in den Fig. 1 und 2 ausgezogen und in Fig. 3 gestrichelt wiedergegebene zylindrische Gestalt einnimmt, sich ein wenig radial nach außen aufblähen, wobei der Druck im wesentlichen unverändert bleibt. Die Druckstöße werden also elastisch abgefangen und gedämpft.

In Fig. 4 ist eine Färbevorrichtung angedeutet, bei welcher die Pumpe 33 über die Leitung 31 eine Färbeflotte aus einem nicht dargestellten Vorrat ansaugt und in die Zuleitung 10 fördert, die auf der einen Seite an das Rohrelement 100 angeschlossen ist und auf der anderen Seite von diesem weiterführt. An dem Anschluß 21 liegt über die Zweigleitung 37 ein Umschaltventil 39, welches die Zweigleitung 37 wahlweise über die Leitung 42 mit dem Bereich 38 geregelten Drucks oder über die Leitung 41 mit einem Unterdruckraum 40 verbinden kann, der von einer Vakuumpumpe ständig evakuiert wird.

Die Leitung 10 fördert die Färbeflotte im Sinne des Pfeiles zu einem Auftragskopf 50 mit einem Gehäuse 45, welches sich quer über die Breite der Bahn erstreckt. In dem Gehäuse ist mindestens ein Zuführkanal 46 ausgebildet, in den die Zuleitung 10 mündet und der seinerseits in einen Austrittsschlitz 48 führt, der sich quer über die Breite der Bahn erstreckt. Der Austrittsschlitz 48 mündet offen in einer Gleitfläche 47 aus, über die die Bahn B im Pfeilsinne transportiert wird.

Im normalen Betriebszustand, in welchem also die Bahn kontinuierlich gefärbt werden soll, wird Färbeflotte im Sinne des Pfeiles 43 zu dem Auftragskopf 50 gefördert und aus dem Austrittsschlitz 48 gegen die Bahn B ausgedrückt und dadurch auf die Bahn B aufgetragen. Der Schlauchabschnitt 30 hat hierbei die in Fig. 3 angedeutete zylindrische Gestalt.

Soll nun die Färbung abrupt beendet werden, wird die Pumpe 33 abgestellt und gleichzeitig das Ventil 39 derart umgestellt, daß die Zweigleitung 37 über die Leitung 41 mit dem Unterdruckraum 40 verbunden wird. Dadurch fällt der Druck in der Ringkammer 25 schlagartig auf den Druck in dem Unterdruckraum 40 ab, wodurch der elastisch nachgiebige Schlauchabschnitt 30 in die gestrichelt wiedergegebene Stellung 32 aufgebläht wird, so daß ein inneres Volumen zunimmt. Die zur Füllung des Schlauchabschnitts 30 in der Gestalt 32 erforderliche Flüssigkeit wird aus der Zuleitung 10 angesaugt, die auf der linken Seite durch die Pumpe 33 geschlossen ist, wodurch das Ansaugen vornehmlich aus dem in Fig. 4 rechten Teil der Zuleitung erfolgt. In dem Austrittsschlitz 48 stehende Färbeflotte wird dabei im Sinne des gestrichelten Pfeiles 49 zurückgesaugt, so daß der Austritt von Färbeflotte an der Austrittsmündung des Austrittsschlitzes 48 schlagartig unterbrochen wird. Je nachdem, ob das Ventil 39 eine Verbindung mit dem Bereich 38 geregelten Drucks oder dem Unterdruckraum 40 herstellt, wirkt das Rohrelement 100 als Dämpfungsglied oder zur Schlitzentlehrung.

In Fig. 5 ist ein weiteres Anwendungsbeispiel für das erfindungsgemäße Rohrelement detaillierter dargestellt. Es handelt sich um eine Vorrichtung zum Auftragen eines Bemusterungsmittels auf eine Bahn, die vorzugsweise zum Färben von Teppichen eingesetzt wird. Das besondere Kennzeichen der Teppichfärbeanlage ist das Vorhandensein zweier Farbzuführstrecken, wobei mit Hilfe eines Farbumschaltventils eine schnelle Umschaltung von der Farbe der einen Farbzuführstrecke auf die der anderen möglich ist. Es ist eine Vielzahl von über die Breite der Bahn unmittelbar nebeneinander angeordneten Farbumschaltventilen vorgesehen, die gemeinsam oder auch separat betätigbar sind, so daß mit der Anlage auch eine Bemusterung der Teppichbahn möglich ist.

Die Einzelheiten des Farbumschaltventils und der damit zusammenwirkenden Elemente sind Gegenstand der deutschen Patentanmeldung 197 05 258.4-26, auf deren Offenbarungsgehalt insoweit zurückgegriffen werden soll.

Die beiden Farbzuführstrecken sind in Fig. 5 als Ganzes mit 60 bzw. 60' bezeichnet und an Farbumschaltventile 80 angeschlossen, welche, wie bereits erwähnt, zahlreich nebeneinander angeordnet sind. Jedes dieser Farbumschaltventile 80 weist die in Fig. 5 links unten dargestellten drei Betriebsstellungen 80',80'' und 80''' auf. Das jeweilige Farbumschaltventil 80 leitet die aus den Farbzuführstrecken 60 bzw. 60' entnommene Färbeflotte über die Leitung 10 dem Austrittsschlitz 48 zu, der gegen den Pol einer kontinuierlich im Pfeilsinne vorbeigeführten Bahn B aus Teppichmaterial ausmündet. Von jedem Farbumschaltventil 80 führt ein Zuführkanal 46 in den Austrittsschlitz 48, der über die Breite der Bahn B durchgeht und allen Zuführkanälen 46 gemeinsam ist. Die aus den einzelnen Zuführkanälen 46 austretenden Färbeflottenmengen vermischen sich an den Rändern in dem Austrittschlitz 48 nur geringfügig. Die Breite des von einem einzelnen Farbumschaltventil 80 versorgten Bereichs der Bahn B kann 20 bis 60 mm betragen, wobei Teilungen von 25 bzw. 50 mm bevorzugt sind. Bei einer Breite der Teppichbahn B von 5 m und einer Teilung von 25 mm liegen also zweihundert Farbumschaltventile 80 nebeneinander.

Soweit in den beiden Farbzuführstrecken 60,60' einerseits und in diesen und den Diagrammen der Fig. 3, 4 und 6 einander funktionell entsprechende Teile vorkommen, sind die gleichen Bezugszahlen benutzt.

In der Farbzuführstrecke 60 saugt die Pumpe 33 über eine Leitung 31, in der ein Filter 51 angeordnet ist, aus einem Vorratsbehälter 52 Färbeflotte einer ersten Art, z.B. rot, an und fördert sie in eine Zuleitung 10, in der sich ein weiteres Filter 53 und ein sogenanntes Abschlagventil 54 anschließen. Die Zuleitung 10 mündet dann in ein Rohrelement 100 der im Zusammenhang mit den Fig. 1 bis 4 schon beschriebenen Art. Nach dem Passieren des Rohrelements 100 gelangt die Färbeflotte über die Zuleitung 10 in einen Verteiler 55, in welchem sie auf eine der Zahl der Farbumschaltventile 80 entsprechende Zahl von Zweigleitungen 56 aufgeteilt wird. Die einzelnen Zweigleitungen 56 münden jeweils in ein ihnen zugeordnetes Farbumschaltventil 80.

Die Farbzuführstrecke 60' umfaßt, wie aus Fig. 5 ersichtlich ist, die gleichen Elemente, die gleich bezeichnet, jedoch zur Unterscheidung von der Farbzuführstrecke 60 zum Teil mit einem Strich versehen sind. In dem Vorratsbehälter 52' ist eine andere Färbeflotte, z.B. blau, enthalten.

Bei der in Fig. 5 dargestellten Situation, bei der das dargestellte einzelne Farbumschaltventil 80 die Stellung 80' und das Abschlagventil 54 die gezeichnete Stellung 1-2 (Anschlüsse 1 und 2 verbunden) einnehmen, wird die von der Pumpe 33 geförderte rote Färbeflotte in den Sammeltank 62 geleitet und aus dem Austrittsschlitz 48 keine Färbeflotte auf die Bahn B aufgetragen.

Zur Vermeidung von Anlaufvorgängen kann gleichzeitig mit dem Auftrag von rot auf die Bahn B der rechte Farbzuführstrang 60' ebenfalls laufen, doch wird, wie aus Fig. 5 ersichtlich, in dem in Fig. 5 dargestellten Zustand die geförderte Färbeflotte blau über die Leitung 57 einem Sammler 58 zugeführt, dem ein sogenanntes Spülventil 59 nachgeschaltet ist, aus welchem die Färbeflotte wahlweise entweder in den Kanal 61 oder in einen Sammeltank 62 überführbar ist, dessen Inhalt später wiederverwendet werden kann. Auch das Spülventil 59 hat drei Stellungen, die in Fig. 5 rechts unten angedeutet sind. Die Stellung 59' entspricht der in Fig. 5 im Betrieb befindlichen Stellung, bei der die blaue Färbeflotte aus dem Vorratsbehälter 52' in den Kanal 61 abgeleitet wird. Bei der Stellung 59" besteht keine Verbindung zu dem Sammler 58. Bei der Stellung 59''' wird die Färbeflotte aus dem Sammler 58 in den Sammeltank 62 geleitet.

Beim Umschalten des Farbumschaltventils 80 in die Stellung 80'' wird blaue Färbeflotte auf die Bahn B aufgetragen und gelangt die rote Färbeflotte in den Sammler 58.

In der Stellung 80''' sind alle Anschlüsse gesperrt.

Es ist ein Unterdruckraum 40 in Gestalt eines Vakuumbehälters vorgesehen, der von einer Vakuumpumpe 63 ständig auf einem niedrigen Druck gehalten wird. Über Leitungen 41 ist der Unterdruckraum 40 an zwei Steuerventile 39,39' angeschlossen, die jeweils einer der Farbzuführstrecken 60 bzw. 60' zugeordnet sind und die die Leitungen 41 wahlweise über die Leitung 42 mit dem Raum 38 geregelten Drucks bzw. über die Leitung 37 mit der Ringkammer 25 des Rohrelements 100 verbinden.

Das besondere Merkmal der Anlage nach Fig. 5 ist die Fähigkeit zum schnellen Farbwechsel, die besonders durch die räumliche Nähe der einzelnen Farbumschaltventile 80 zum Austrittsschlitz 48 gefördert wird, die zu diesem Zweck in einem gemeinsamen Auftragskopf 50 angeordnet sind.

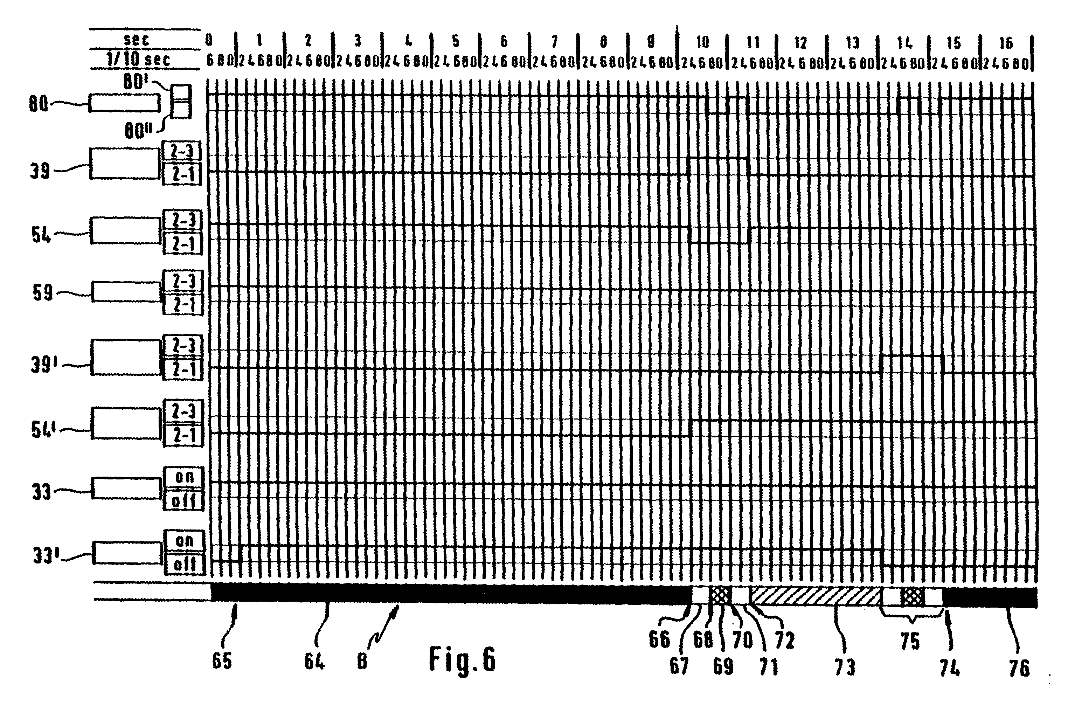

Zur Demonstration eines schnellen Farbwechsels ist in Fig. 6 der Schaltablauf der verschiedenen Ventile bei der Durchführung eines sogenannten "Abschlages" dargestellt. Ein "Abschlag" ist das zwischenzeitliche Färben einer kurzen Musterlänge in einer anderen Farbe während des Färbens in einer ersten Farbe. Die Bahn läuft also kontinuierlich vor und wird in der ersten Farbe gefärbt. Dann erfolgt ein Umschalten auf die andere Farbe und anschließend wieder ein Weiterfärben in der ersten Farbe. Die kurze Musterlänge dient zur Kontrolle des Färbungsausfalls in der anderen Farbe während der Weiterfärbung in der ersten Farbe, um gegebenenfalls noch Einfluß auf den Färbeflottenansatz der anderen Farbe nehmen zu können, ohne daß dafür Stillstandszeiten auftreten.

Es sei für diesen Zweck angenommen, daß alle Farbumschaltventile 80 gleichzeitig von einer Färbeflotte auf die andere umgeschaltet werden, also von einer Unifärbung auf die nächste übergegangen wird, ohne Bemusterung durch unterschiedliche Betätigung benachbarter Farbumschaltventile 80.

In Fig. 6 ist oben die Zeitskala in Sekunden angegeben. Darunter sind die Schaltstellungen der einzelnen Elemente wiedergegeben, die mit den Bezugszahlen der Fig. 5 bezeichnet sind.

Die Farbumschaltventile 80 stehen zunächst in der Stellung 80', in der die Färbeflotte aus dem Vorratsbehälter 52, also rot, auf die Bahn B aufgetragen wird, was durch den schwarzen Streifen 64 bei dem Buchstaben "B" angedeutet sein soll. Das Abschlagventil 54 befindet sich dabei, anders als in Fig. 5, in der Stellung 2-3, damit die rote Färbeflotte bis zu den Farbumschaltventilen 80 gelangen kann.

Wenn der Farbabschlag auf blau durchgeführt werden soll, wird einige Sekunden vorher an der Stelle 65 die Farbpumpe 33' für blau der Farbzuführstrecke 60' eingeschaltet, die ihre Fördermenge, weil das Abschlagventil 54', anders als in Fig. 5, zunächst in der Stellung 1-2 steht, in den Sammeltank 62 leitet.

An der Stelle 66 wird das Abschlagventil 54' umgeschaltet, so daß die blaue Färbeflotte nicht mehr in den Sammeltank 62, sondern bei der Stellung 80' des Farbumschaltventils 80 in den Kanal 61 geleitet wird. Gleichzeitig wird das Abschlagventil 54, bei welchem zunächst die Anschlüsse 2 und 3 verbunden waren, so daß rote Färbeflotte in den Auftragsschlitz 48 gelangen konnte, auf die Stellung 2-1 umgeschaltet, in der die rote Färbeflotte in den Sammeltank 62 abgeleitet wird. Ferner wird gleichzeitig wird an der Stelle 66 das Steuerventil 39 in die Stellung 2-3 umgeschaltet, in der das Rohrelement 100 mit dem Unterdruckraum 40 verbunden wird, so daß der Schlauchabschnitt 30 in die Stellung 32 aufgebläht wird und die in dem Austrittsschlitz 48, den Zuführkanälen 46, den Farbumschaltventilen 80 und in den Leitungen 56 stehende rote Färbeflotte etwas zurückzieht, so daß praktisch schlagartig aus dem Austrittsschlitz 48 keine rote Färbeflotte mehr auf die Bahn B gelangt. Von der Stelle 66 an bleibt die Bahn B also eine kurze Zeit weiß, was durch 67 angedeutet sein soll.

An der Stelle 68 schalten die Farbumschaltventile 80 in die Stellung 80'' um, so daß blaue Färbeflotte in den Austrittsschlitz 48 gefördert wird, die sich über einen kurzen Zeitraum mit der roten Färbeflotte in den Farbumschaltventilen 80, den Zuführkanälen 46 und dem Austrittsschlitz 48 mischt, so daß eine Mischfarbe auf der Bahn B entsteht, die durch den kreuzschraffierten Bereich 69 angedeutet sein soll. An der Stelle 70 werden die nunmehr von rot gereinigten Farbumschaltventile 80 auf Rot zurückgestellt, erhalten aber keine rote Färbeflotte, weil das Abschlagventil 54 nach wie vor in der Stellung 2-1 steht, so daß die rote Färbeflotte vor den Farbumschaltventilen 80 in den Sammeltank 62 abgeleitet wird. Es wird also auf die Bahn B nichts aufgetragen, was durch das weiße Feld 71 angedeutet sein soll.

An der Stelle 72 werden gleichzeitig die Farbumschaltventile 80 in die Stellung 80'' für Blau, das Steuerventil 39' in die Stellung 2-1 für den Sammeltank 62 und das Abschlagventil 54 in die Stellung 2-3 umgeschaltet. Die rote Färbeflotte gelangt dadurch in den Sammler 58, während auf die Bahn B nunmehr rein blaue Färbeflotte aufgetragen wird, wie durch das schraffierte Feld 73 angedeutet sein soll. Die in den Farbumschaltventilen 80, den Zuführkanälen 46 und dem Austrittsschlitz 48 verbliebenen Rotreste sind ja in der Phase 69 ausgespült worden. Die Länge des Abschnittes 73 wird bedarfsweise gewählt, um die notwendigen Farbbestimmungen oder Farbmessungen durchführen zu können. Anschließend erfolgen in dem Bereich 75 die entsprechenden Schritte sinngemäß umgekehrt, so daß an der Stelle 74 die rote Färbung 76 wieder fortgesetzt wird.

Es ist zu beachten, daß von der Stelle 66 bis zu der Stelle 72 nur 1,2 Sekunden vergehen. Dies entspricht der Zeitdauer des Übergangs auf eine andere Farbe. Entsprechend beträgt auch die Zeit zum Durchlaufen des Abschnitts 75 1,2 Sekunden. Bei einer Vorlaufgeschwindigkeit der Bahn B von 15 m/min bedeutet die Übergangszeit von 1,2 Sekunden eine Strecke von nur 30 cm, auf der ein Übergang von einer Farbe auf eine andere stattfinden kann, ohne daß am Anfang der neuen Farbe Farbmischtöne vorliegen. Das in Fig. 6 dargestellte Beispiel befaßt sich mit einem Abschlag, bei welchem nach dem Übergang auf die blaue Farbe 73 wieder eine Rückkehr zur roten Farbe 76 stattfand. Es versteht sich, daß man für einen reinen Farbwechsel der an der Stelle 72 erreichte Schaltzustand der Komponenten einfach beibehalten wird, so daß die gesamte anschließende Bahnlänge wie das Musterstück 73 rot gefärbt wird.

Wichtig für die Erreichung des übergangsfreien Farbwechsels ist das Vorhandensein der Rohrelemente 100, mit deren Hilfe ein Nachlaufen von Farbe aus dem Auftragsschlitz 48 unterbunden werden kann und ein abruptes Stoppen des Farbauftrags möglich ist.

## Patentansprüche

1. Vorrichtung zum Auftragen eines flüssigen Behandlungsmittels auf eine Bahn (B),
mit einem Auftragskopf (50), in welchen eine Zuleitung (10) für das Behandlungsmittel führt und in welchem Zuführkanäle (46) für das Behandlungsmittel ausgebildet sind,
mit einem in dem Auftragskopf (50) ausgebildeten, sich quer über die Breite der Bahn (B) erstreckenden Auftragsschlitz (48), in welchem die Zuführkanäle (46) münden und der seinerseits gegen die Bahn (B) ausmündet,
und mit Transportmitteln, mittels deren die Bahn (B) an dem Austrittsschlitz (48) vorbeiführbar ist,
**dadurch gekennzeichnet,**
daß in der Zuleitung (10) ein Rohrelement (100,100') mit folgenden Merkmalen angeordnet ist:
a) es umfaßt ein rohrförmiges, einen der Zuleitung (10) im Durchmesser entsprechenden inneren Durchgang aufweisendes Gehäuse (G) mit Mitteln zum flüssigkeitsdichten Anschluß an fluchtende, in Richtung der Rohrachse (A) Abstand voneinander aufweisende Enden (10',10") der Zuleitung (10),
b) in dem Gehäuse (G) ist eine mit einem Anschluß (21) versehene Ringkammer (25) ausgebildet, deren äußere Begrenzung ringsum radialen Abstand zu einer gedachten, den Innenumfang der Rohrleitung (10) fortsetzenden Zylinderfläche (1) beläßt,
c) die Ringkammer (25) ist an beiden Enden axial durch radial nach innen bis an die Zylinderfläche (1) reichende Umfangsvorsprünge (5,6) begrenzt,
d) über die Umfangsvorsprünge (5,6) ist ein im wesentlichen in der Zylinderfläche (1) angeordneter Schlauchabschnitt (30) aus einem in seiner Fläche elastisch nachgiebigem Material gespannt
und daß der Anschluß der Ringkammer (25) des Rohrelements (100,100') über ein in der Verbindungsleitung (37,41) zwischen dem Rohrelement (100,100') und dem Unterdruckraum (40) angeordnetes Steuerventil (39) wahlweise mit einem Unterdruckraum (40) bzw. einem Bereich (38) eines wählbaren Gegendrucks verbindbar ist.

2. Vorrichtung nach Anspruch 1, **dadurch gekennzeichnet,** daß das Gehäuse (G) einen die Ringkammer (25) umschließenden Rohrabschnitt (2) mit radialen Flanschen (3,4) an den Enden umfaßt, die die Umfangsvorsprünge (5,6) bilden.

3. Vorrichtung nach Anspruch 2, **dadurch gekennzeichnet,** daß mit den radialen Flanschen (3,4) zusammenwirkende Klemmringe zum Einspannen der Enden (30',30") des Schlauchabschnitts (30) vorgesehen sind.

4. Vorrichtung nach Anspruch 3, **dadurch gekennzeichnet,** daß die Klemmringe als Konusringe (11,12) ausgebildet sind, die - in einem durch die Achse gehenden Schnitt - winklig mit einem radialen Schenkel (13,14) und einem von dessen innerem Randbereich axial nach innen vorspringenden axialen Schenkel (15,16) ausgebildet sind, wobei der axiale Schenkel (15,16) mit dem jeweiligen radialen Flansch (3,4) das jeweilige Ende (30',30") des Schlauchabschnitts (30) einklemmt.

5. Vorrichtung nach Anspruch 4, **dadurch gekennzeichnet,** daß sich der radiale Schenkel (13,14) radial vor der Stirnseite des radialen Flansches (3,4) erstreckt und mittels über den Umfang verteilter axialer Spannschrauben (S) gegen den radialen Flansch (3,4) anziehbar ist.

6. Vorrichtung nach Anspruch 5, **dadurch gekennzeichnet,** daß der Außenumfang des axialen Schenkels (15,16) und der Innenumfang des radialen Flansches (3,4) zusammenwirkende, sich axial nach innen verjüngende Konusflächen (7,8) bzw. (17,18) bilden, zwischen die das jeweilige Ende (30',30") des Schlauchabschnitts (30) einfügbar und durch Anziehen der Spannschrauben (S) einklemmbar ist.

7. Vorrichtung, nach einem der Ansprüche 1 bis 6, **dadurch gekennzeichnet,** daß in der Zuleitung (10) zu dem Austrittsschlitz (48) ein Abschaltventil (54,54') angeordnet ist, mittels dessen die Zuleitung (10) wahlweise mit dem Austrittsschlitz (48) bzw. einem Sammeltank (62) für das Behandlungsmittel oder dem Kanal (61) verbindbar ist.

8. Vorrichtung, nach einem der Ansprüche 1 bis 7, **dadurch gekennzeichnet,** daß ein Spülventil (59) vorgesehen ist, mittels dessen der gegen die Bahn (B) geschlossene Austrittsschlitz (48) wahlweise mit dem Kanal (61) bzw. einem Sammeltank (62) verbindbar ist.

## Claims

1. A device for applying a liquid processing agent to a web (B),
comprising an applicator head (50) into which a feed line (10) for the processing agent extends and supply ducts (46) for the processing agent are formed,
comprising an applicator slot (48) formed in the applicator head (50) and extending transversely across the width of the web (B), the supply ducts (46) leading into the slot and the slot opening towards the web (B), and
comprising conveyor means for moving the web (B) past the outlet slot (48),
characterised in that
a pipe element (100, 100') is disposed in the feed line (10) and has the following features:
(a) it comprises a tubular casing (G) formed with an inner passage corresponding in diameter to the feed line (10) and comprising means for liquid-tight sealing to aligned ends (10', 10'') of the feed line (10) spaced apart in the direction of the tube axis (A),
(b) an annular chamber (25) comprising a connection (21) is formed in the casing (G) and its outer boundary leaves a radial space all round between it and an imaginary cylindrical surface (1) continuing the inner periphery of the pipeline (10),
(c) the annular chamber (25) is axially bounded at both ends by peripheral projections (5, 6) which extend radially inwards as far as the cylindrical surface (1),
(d) a hose portion (30) disposed substantially in the cylindrical surface (1) and made of a flexible material elastic over its surface is clamped over the peripheral projections (5, 6), and in that
the connection of the annular chamber (25) of the tubular element (100, 100') is connectable optionally to a negative-pressure chamber (40) or to a region (38) at a selectable counter-pressure via a control valve (39) disposed in the connecting line (37, 41) between the tubular element (100, 100') and the negative-pressure chamber (40).

2. A device according to claim 1, characterised in that the casing (G) comprises a tubular portion (2) surrounding the annular chamber (25) and ending in radial flanges (3, 4) which form the peripheral projections (5, 6).

3. A device according to claim 2, characterised in that clamping rings co-operating with the radial flanges (3, 4) are provided for clamping the ends (30', 30") of the hose portion (30).

4. A device according to claim 3, characterised in that the clamping rings are conical rings (11, 12) which, in section through the axis, are bent at an angle and have a radial arm (13, 14) and an axial arm (15, 16) projecting axially inwards from the inner edge region of the radial arm, the axial arms (15, 16) co-operating with the respective radial flange (3, 4) to clamp the respective end (30', 30'') of the hose portion (30).

5. A device according to claim 4, characterised in that the radial arm (13, 14) extends radially in front of the end face of the radial flange (3, 4) and can be tightened against the radial flange (3, 4) via peripherally distributed axial clamping screws (S).

6. A device according to claim 5, characterised in that the outer periphery of the axial arm (15, 16) and the inner periphery of the radial flange (3, 4) form co-operating axially inwardly tapering conical surfaces (7, 8) or (17, 18), between which the respective end (30', 30") of the hose portion (30) can be inserted and can be clamped by tightening the clamping screws (S).

7. A device according to any of claims 1 to 6, characterised in that a by-pass valve (54, 54') is disposed in the feed line (10) to the outlet slot (48) in order to connect the feed line (10) optionally to the outlet nozzle (48) or to a collecting tank (62) for the processing agent or to the duct (61).

8. A device according to any of claims 1 to 7, characterised in that a flushing valve (59) is provided, by means of which the outlet nozzle (48) closed against the web (B) can be connected optionally to the duct (61) or to a collecting tank (62).

## Revendications

1. Dispositif pour l'application d'un agent de traitement fluide sur une bande (B), comportant :
- une tête d'application (50) à laquelle aboutit une conduite (10) d'amenée de l'agent de traitement, et dans laquelle sont formés des canaux (46) que traverse l'agent de traitement,
- dans la tête d'application (50) et s'étendant transversalement sur toute la largeur de la bande (B), une fente de sortie (48) dans laquelle débouchent les canaux (46) amenant l'agent et qui elle-même débouche sur la bande (B),
- des moyens de transport, pouvant faire défiler la bande (B) devant la fente de sortie (48),
caractérisé en ce que
dans la conduite d'amenée (10) est monté un élément tubulaire (100, 100') présentant les caractéristiques suivantes :
a) il comprend un boîtier tubulaire (G), présentant un passage interne de diamètre correspondant à celui de la conduite (10) et il est équipé de moyens pour le raccorder, avec étanchéité aux liquides, avec alignement selon la direction axiale (A) du tube, aux extrémités (10', 10") espacées l'une de l'autre, de la conduite (10),
b) dans le boîtier (G) se trouve une chambre annulaire (25) équipée d'un raccord (21) et cette chambre a sa surface périphérique externe située à une certaine distance radiale d'une surface cylindrique idéale (1) prolongeant la surface interne de la conduite (10),
c) la chambre annulaire (25) est, à ses deux extrémités, délimitée axialement par des saillies périphériques (5, 6) allant jusqu'à la surface cylindrique,
d) sur les saillies périphériques (5, 6) est serré un segment de tuyau (30) situé essentiellement dans la surface cylindrique (1) et fait d'un matériau élastiquement expansible dans sa surface,
et le raccordement de la chambre annulaire (25) de l'élément tubulaire (100, 100') pouvant par l'intermédiaire d'une soupape de commande (39) montée dans la conduite (37, 41) reliant l'élément tubulaire (100, 100') à une chambre de dépression (40), être assuré à volonté soit à cette chambre (40) soit à une zone (38) présentant une contre-pression que l'on peut choisir.

2. Dispositif selon la revendication 1,
caractérisé en ce que
le boîtier (G) comprend un segment tubulaire (2) enfermant la chambre annulaire (25) par des brides radiales (3, 4) situées aux extrémités que forment les saillies périphériques (5, 6).

3. Dispositif selon la revendication 2,
caractérisé en ce que
pour serrer les extrémités (30', 30'') des segments de tuyau (30), on prévoit des bagues de serrage coopérant avec les brides radiales (3, 4).

4. Dispositif selon la revendication 3,
caractérisé en ce que
les bagues de serrage sont des bagues coniques (11, 12) qui, vues en coupe passant par l'axe, présentent une aile radiale (13, 14) et, partant de l'extrémité interne de celle-ci une aile (15, 16) axiale faisant saillie axialement vers l'intérieur, l'aile axiale (15, 16) et la bride radiale (3, 4) enserrant l'extrémité correspondante (30', 30") du segment de tuyau (30).

5. Dispositif selon la revendication 4,
caractérisé en ce que
l'aile radiale (13, 14) s'étend radialement devant la face frontale de la bride radiale (3, 4) et peut être serrée sur cette bride (3, 4) par des vis de serrage axiales (S) réparties sur la périphérie.

6. Dispositif selon la revendication 5,
caractérisé en ce que
la périphérie externe de l'aile axiale (15, 16) et la périphérie interne de la bride radiale (3, 4) forment des portées coniques (7, 8) ou (17, 18) se rétrécissant vers l'intérieur et qui coopèrent entre elles, entre lesquelles l'extrémité correspondante (30', 30'') du segment de tuyau (30) peut être engagée et pincée par l'action des vis de serrage (S).

7. Dispositif selon l'une quelconque des revendications 1 à 6,
caractérisé en ce que
dans la conduite d'amenée (10) vers la fente de sortie (48) est montée une soupape de coupure (54, 54') par l'intermédiaire de laquelle la conduite (10) peut à volonté être reliée soit à la fente de sortie (48) soit à un réservoir collecteur (62) contenant l'agent de traitement, ou à un caniveau (61).

8. Dispositif selon l'une quelconque des revendications 1 à 7,
caractérisé par
une soupape de rinçage (59) permettant de relier la fente de sortie (48) appliquée sur la bande (B) à volonté au caniveau (61) ou à un réservoir collecteur (62).
